# EUROPEAN PATENT SPECIFICATION

(11) **EP 3 545 435 B1**
(45) Date of publication and mention of the grant of the patent: **26.10.2022**
(21) Application number: 17880301.1
(22) Date of filing: 05.12.2017
(51) Int. Cl.: G06F 16/2453

(54) **DATABASE SYSTEM AND METHOD FOR COMPILING SERIAL AND PARALLEL DATABASE QUERY EXECUTION PLANS**
DATENBANKSYSTEM UND VERFAHREN ZUM KOMPILIEREN VON SERIELLEN UND PARALLELEN DATENBANKABFRAGEAUSFÜHRUNGSPLÄNEN
SYSTÈME DE BASE DE DONNÉES ET PROCÉDÉ DE COMPILATION DE PLANS D'EXÉCUTION D'INTERROGATION DE BASE DE DONNÉES EN SÉRIE ET EN PARALLÈLE

(30) Priority: 16.12.2016 US 201662435592 P; 24.01.2017 US 201715414560
(43) Date of publication of application: 02.10.2019
(73) Proprietor: Huawei Technologies Co., Ltd., Longgang District Shenzhen, Guangdong 518129 (CN)
(72) Inventor: PEI, Chunfeng, Shenzhen, Guangdong 518129 (CN); ZHANG, Li, Plano, TX 75024 (US)
(74) Representative: Pfenning, Meinig & Partner mbB
(86) International application number: PCT/CN2017/114649
(87) International publication number: WO 2018/108000

(56) References cited:
- CN-A- 102 118 264
- CN-A- 102 323 946
- CN-A- 103 678 619
- US-A1- 2006 218 123
- US-A1- 2014 114 952
- US-A1- 2014 114 952
- US-B2- 8 813 054
- US-B2- 8 954 419
- JINGREN ZHOU ET AL: "Incorporating partitioning and parallel plans into the SCOPE optimizer", DATA ENGINEERING (ICDE), 2010 IEEE 26TH INTERNATIONAL CONFERENCE ON, IEEE, PISCATAWAY, NJ, USA, March 2010 (2010-03), pages 1060-1071, XP031657827, ISBN: 978-1-4244-5445-7
- Kevin Cox ET AL: "Understanding and Controlling Parallel Query Processing in SQL Server Technical Reviewers: Applies to: SQL Server 2008 R2", , October 2010 (2010-10), XP055622708, Retrieved from the Internet: URL:http://download.microsoft.com/download /b/e/1/be1aabb3-6ed8-4c3c-af91-448ab733b1a f/sql2008r2_parallel_qp_understanding_and_ controlling.docx [retrieved on 2019-09-16]
- Lane Paul ET AL: "Oracle Database Data Warehousing Guide 10g Release 2 (10.2) - Chapter 25: Using Parallel Execution", , 1 December 2005 (2005-12-01), XP055796937, Retrieved from the Internet: URL:https://web.stanford.edu/dept/itss/doc s/oracle/10gR2/server.102/b14223.pdf [retrieved on 2021-04-19]

## Description

### FIELD OF THE INVENTION

The present invention relates to database systems, and more particularly to compiling and executing query execution plans.

### BACKGROUND

Database systems typically process database queries by first establishing a database query execution plan for processing the queries in order to retrieve requested data. Such execution plans are typically compiled without any *α priori* knowledge of the processing resources available for carrying out the query execution plan. By compiling such query execution plans without consideration of resource availability, the performance of such query execution plans often exhibits inefficiencies and/or a lack of effectiveness. This is because such static query execution plans may not necessarily accommodate the specific resource availability at the node that will execute the same.

JINGREN ZHOU ET AL.: "Incorporating partitioning and parallel plans into the SCOPE optimizer", DATA ENGINEERING (ICDE), 2010 IEEE 26th International Conference on, IEEE, Piscatway, NJ, USA, March 2010, pages 1060-1071, XP031657827, ISBN: 978-1-4244-5445-7, discloses enabling the SCOPE optimizer to integrate consideration of parallel, serial, and mixed plans into the cost-based optimization.

### SUMMARY

The present invention is as defined in the appended independent claim. An apparatus, method, and non-transitory computer-readable media are provided for compiling serial and parallel database query execution plans.

An apparatus is provided for compiling serial and parallel database query execution plans. Included is a non-transitory memory comprising instructions, and one or more processors in communication with the memory. The one or more processors execute the instructions to parse a database query into a tree structure. Further, a serial execution plan and a parallel execution plan are compiled for the database query, utilizing the tree structure. An amount of resources is identified for executing the database query. Still yet, the serial execution plan and/or the parallel execution plan is selected, based on the identified amount of resources. To this end, the database query is executed, utilizing the selected serial execution plan and/or the parallel execution plan.

A method is provided for compiling serial and parallel database query execution plans. In use, a processing device parses a database query into a tree structure. Further, the processing device compiles a serial execution plan and a parallel execution plan for the database query, utilizing the tree structure. The processing device also identifies an amount of resources for executing the database query. The processing device selects the serial execution plan and/or the parallel execution plan, based on the identified amount of resources. To this end, the processing device executes the database query, utilizing the selected serial execution plan and/or the parallel execution plan.

A non-transitory computer-readable media storing computer instructions is also provided, that when executed by one or more processors, cause the one or more processors to perform the steps of parsing a database query into a tree structure; compiling a serial execution plan for the database query, utilizing the tree structure; compiling a parallel execution plan for the database query, utilizing the tree structure; identifying an amount of resources for executing the database query; selecting at least one of the serial execution plan or the parallel execution plan, based on the identified amount of resources; and executing the database query, utilizing the selected serial execution plan and/or the parallel execution plan.

In some processing device, method, or computer-readable media embodiments, information common to both the serial execution plan and the parallel execution plan may be identified. Further, such information may be stored in a common data structure shared by the serial execution plan and the parallel execution plan.

In some processing device, method, or computer-readable media embodiments, a degree of parallelism may be determined for the parallel execution plan based on the identified amount of resources, if the parallel execution plan is selected. The degree of parallelism is less than a number of entries of the database query. Further, the database query may be executed utilizing the parallel execution plan with the determined degree of parallelism, if the parallel execution plan is selected.

In some processing device, method, or computer-readable media embodiments, the database query may be executed utilizing a round robin routine, if the parallel execution plan is selected.

In some processing device, method, or computer-readable media embodiments, a change in the amount of resources may be identified. Further, the degree of parallelism may be adjusted based on the identified change in the amount of resources.
As an option, the change in the amount of resources may be identified after a completion of the execution in connection with one of the entries of the database query. Further, the degree of parallelism for the parallel execution plan may be determined at runtime.

In some processing device, method, or computer-readable media embodiments, the database query may include a union operator, a union all operator, an except operator, and/or an intersect operator.

In some processing device, method, or computer-readable media embodiments, the execution may occur at each of a plurality of data storage nodes.

In some processing device, method, or computer-readable media embodiments, the identified amount of resources may include at least one of: a count of processing threads, a count of processing cores, or an amount of processing time.

According to the invention, in the processing device, method, or computer-readable media embodiments, the selection of at least one of the serial execution plan or the parallel execution plan is based on the identified amount of resources, by: comparing the identified amount of resources to a threshold; and selecting at least one of the serial execution plan or the parallel execution plan, based on the comparison.

To this end, in some optional embodiments, a database query execution plan may be selected based on a specific availability of resources. Further, such selection may be performed in real-time at a time of execution such that any indication of such resource availability is as accurate as possible. This may, in turn, result in improved performance when processing query execution plans, as well as an improved use of resources that would otherwise be foregone in systems that lack such feature. It should be noted that the aforementioned potential advantages are set forth for illustrative purposes only and should not be construed as limiting in any manner.

### BRIEF DESCRIPTION OF THE DRAWINGS

Figure **1A** illustrates a database system for executing both serial and parallel query execution plans, in accordance with an embodiment.
Figure **1B** illustrates a flowchart of a method for compiling both serial and parallel execution plans and executing the same at runtime, in accordance with an embodiment.
Figure **2** illustrates a database system for executing both serial and parallel query execution plans, in accordance with another embodiment.
Figure **3** illustrates a flowchart of a method for selecting a serial or parallel query execution plan based on available resources, in accordance with another embodiment.
Figure **4** illustrates a flowchart of a method for executing a parallel execution plan, in accordance with an embodiment.
Figure **5** illustrates a technique for storing information that is common to both a serial and parallel execution plan in a shared data structure, in accordance with an embodiment.
Figure **6** illustrates a system for executing both serial and parallel query execution plans, in accordance with an embodiment.
Figure **7** is a diagram of a network architecture, in accordance with an embodiment.
Figure 8 is a diagram of an exemplary processing device, in accordance with an embodiment.

### DETAILED DESCRIPTION

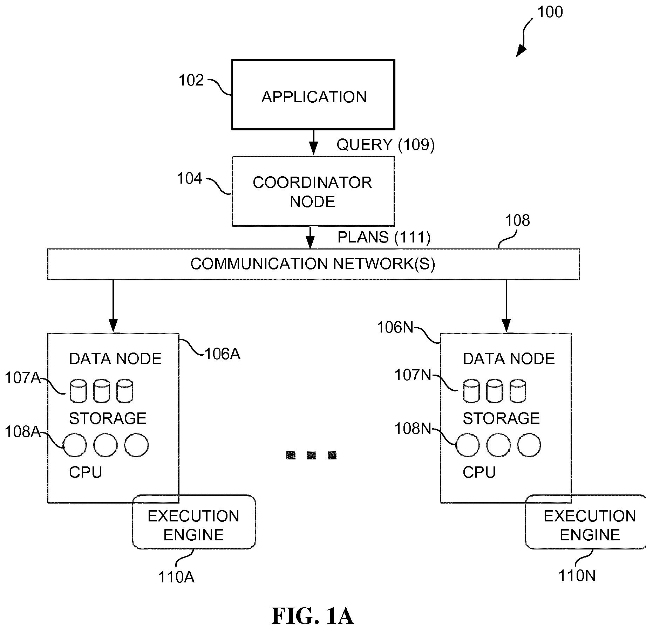

Figure **1A** illustrates a database system **100** for executing both serial and parallel query execution plans, in accordance with an embodiment. As shown, the database system **100** includes an application **102** in communication with a coordinator node **104** that, in turn, is in communication with a plurality of data storage nodes **106A-106N** via one or more communication networks **108.** Further, the data storage nodes **106A-106N** each include a plurality of respective computer-readable storages **107A-107N,** processors **108A-108N,** and execution engines **110A-110N.**

In one embodiment, data is stored on the storages **107A-107N** in the form of database tables. Further, in various embodiments, different ones of the storages **107A-107N** may store different partitions of such tables, in some use case scenarios. Further, in a use case that employs smaller tables, the corresponding data may be replicated and stored on a plurality (or all) of the storages **107A-107N.**

In one possible embodiment, the database system **100** may include a database management system (DBMS). Further, such DBMS may include a massively parallel processing (MPP) database that is optimized for processing many queries (or portions thereof) in parallel. In such optional embodiment, the aforementioned processors **108A-108N** may each be equipped with a dedicated, separate operating system and memory, and further be equipped with multiple internal cores to enhance parallel processing capabilities. More information will now be set forth regarding each of the foregoing components of the database system **100** as well as the interoperation thereof.

In the context of the present description, the application **102** may include any local or remote software program that is capable of issuing database queries **109** for the purpose of ultimately retrieving data stored on the data storage nodes **106A-106N**. Further, the aforementioned queries **109** may each include any data structure that may be used to effect or support the retrieval of the data stored on the data storage nodes **106A-106N.** Still yet, the coordinator node **104** may include any combination of hardware and software that is configured for generating query execution plans **111** for the queries **109** and further distributing the same to the data storage nodes **106A-106N** so that such query execution plans **111** may be executed by the respective execution engines **110A-110N** for retrieving the desired data and returning the same to the application **102** via the coordinator node **104.**

In use, the application **102** issues the queries **109** to the coordinator node **104** which, in turn, processes the queries **109** in order to generate the execution plans **111** for distribution to the storage nodes **106A-106N** for execution. Specifically, the coordinator node **104** generates both serial and parallel execution plans **111** which are both communicated to the data storage nodes **106A-106N.** Upon receipt, the data storage nodes **106A-106N** utilize the respective execution engines **110A-110N** to process the serial and parallel execution plans **111** by: identifying an amount of available resources in connection with the corresponding storages **107A-107N** and processors **108A-108N,** and then executing at least one of the serial and/or parallel execution plans **111** based on such available resources.

In the context of the present description, the resource amount identification refers to measurement of resources. For example, in one option, the resource amount identification includes a count of available processing threads. In another option, the resource amount identification includes a count of available processing cores. In still another option, an identification of available processing time constitutes the resource amount identification. In even still other options, one or more memory resources available to a processor are also considered a resource. In additional embodiments, the foregoing resource amount identification may be determined indirectly. For example, the count of available processing threads and/or available processing cores may be inferred via a measurement of a processor load.

Further, the measurement of such resources may be conducted in any desired manner. Just by way of example, available processing threads may be a predetermined number for each database instance, based on a thread allocation. Further, when one processing thread is used, such available number of threads may be reduced by one. To this end, the number of available threads is always known at any given time. Further, regarding processor core count, such parameter may be provided by an operating system in response to corresponding system calls.

By this design, the data storage nodes **106A-106N** are capable of selecting between the serial and parallel execution plans **111** at runtime based on the real-time availability of resources at the data storage nodes **106A-106N.** Further, as will soon become apparent, to the extent that the parallel execution plan 111 is selected for execution, a degree of parallelism may be determined in connection with such parallel execution plan **111,** where such degree of parallelism is also based on the availability of resources at the data storage nodes **106A-106N.**

Figure **IB** illustrates a flowchart of a method **150** for compiling both serial and parallel execution plans and executing the same at runtime, in accordance with an embodiment. As an option, the method **150** may be implemented in the context of any one or more of the embodiments set forth in any previous and/or subsequent figure(s) and/or description thereof. For example, the method **150** may be implemented by the database system **100** of Figure **1A****.** However, it is to be appreciated that the method **150** may be implemented in other suitable environments.

As shown, a database query **152** is issued by an application (e.g. the application **102** of Figure **1A****).** In various embodiments, the database query **152** may include a structured query language (SQL) query that may include any desired number of components (e.g. subqueries, statements, operators, data parameters, entries, etc.) of various types. For example, in the case of operators, such components may include, but are not limited to a union operator, a union all operator, an except operator, and/or an intersect operator. An exemplary query is set forth below in Table 1. It should be noted that such query of Table 1 is set forth for illustrative purposes only and should not be construed as limiting in any manner whatsoever.

**Table 1**

| |
|---|
| SELECT C11, C12, ... C1n |
| FROM table_1 |
| [WHERE conditions] |
| |
| UNION ALL |
| SELECT C21, C22, ... C2n FROM table_2 |
| [WHERE conditions] |
| |
| ........ |
| |
| UNION ALL |
| SELECT Cml, Cm2, ... Cmn FROM table_m |
| [WHERE conditions]; |

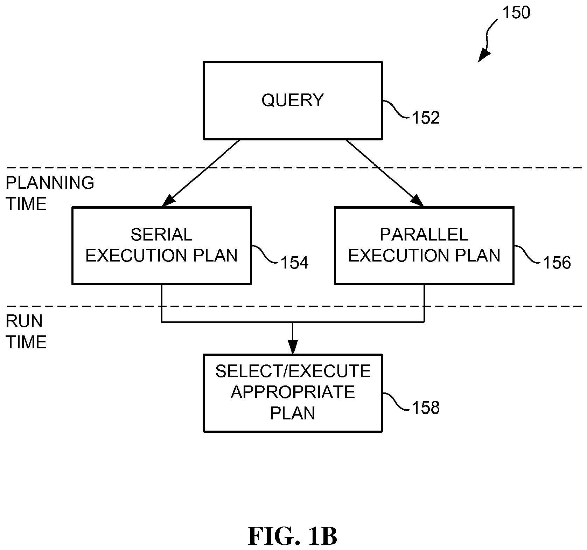

With continuing reference to Figure **1B****,** the database query **152** is sent to a node of a database system (e.g. the coordinator node **104** of the database system **100** of Figure **1A****)** for generating an execution plan that is capable of being executed to retrieve the data outlined in the database query. As shown, both a serial execution plan **154** and a parallel execution plan **156** are compiled.

In the context of the present description, the serial execution plan **154** refers to any plan where execution of one or more components of the database query **152** is completed before another one or more components of the database query **152** is initiated. For example, in one possible embodiment, the serial execution plan **154** may include an array of entries that are ordered in a manner that dictates an order in which the entries of the array are processed, one-by-one. Further, each entry of the array may correspond with one or more components of the database query **152.** By this design, such serial plan may include information that indicates/tracks an initial/current array entry, an order of operations, as well as any other additional information (e.g. that dictates use of a data buffer, etc.).

It should be noted that, in the serial plan, each array entry is independent of another, such that the order of processing may be dictated by the serial plan in any desired manner. For example, as mentioned earlier, the serial plan may simply dictate such processing order based on an order of the entries in the associated array. In use, the foregoing information of the serial plan is used when the plan is executed, such that a first entry of a subquery array may be processed, and a result returned. After the processing of the first entry is complete, the serial plan indicates a second entry to process so as to return another result. This may be repeated until all the entries of the array have been processed and results have been returned to a requesting application.

Further, the parallel execution plan **156** refers to any plan where execution of one or more components of the database query **152** is initiated before another one or more components of the database query **152** is completed such that different components are executed, at least in part, simultaneously in parallel. For example, in one possible embodiment, the parallel execution plan **156** may include an array of entries, in addition to information that indicates that the array entries may be processed in parallel.

By this design, such parallel plan may include information that supports parallel execution. Further, in one possible embodiment, the parallel plan may be used to dynamically determine the aforementioned degree of parallelism at a time of execution. Once the degree of parallelism is determined, a corresponding number of threads may be created, where each thread processes one entry of the array at a same time. Once each thread is done, the parallel plan directs processing to a next unprocessed array entry and so on, until every entry in the array has been processed. It should be noted that, in some embodiments, a serial plan may be converted to a parallel plan by adding the foregoing parallel plan-related information, in order to support parallel processing.

In the context of a specific optional embodiment involving queries such as that of Table 1, a query may involve multiple subqueries in the form of select statements that are each the subject of a union all operator. In such embodiment, the array entries of different subqueries (represented by the select statements) may be run in parallel. To this end, the foregoing parallelism may be applied at the select statement/subquery level, in the present embodiment.

As will soon become apparent, the serial and parallel execution plans **154/156** may be compiled to use an append operator. Such append operation may be constructed to represent a list of query components (e.g. sub-queries, etc.) whose results may be merged, appended, and returned to a next stage of query operation. Specifically, each sub-query may be inserted into an array such that, when executed at execution time, the array may be processed, one entry at a time during serial execution, or in parallel using different threads for different sub-queries during parallel execution.

To this end, the serial and parallel execution plans **154/156** are distributed to appropriate nodes (e.g. the data storage nodes **106A-106N** of Figure **1A****)** so that respective execution engines (e.g. the execution engines **110A-110N** of Figure **1A****)** can select among the serial and parallel execution plans **154/156** for executing the same and retrieving the corresponding data. By generating both serial and parallel execution plans **154/156** and distributing the same to appropriate nodes that store the desired data, a decision may be made at such nodes in operation **158** as to which of the serial and parallel plans is most suitable in view of the real-time status of any underlying resources that would be relied upon to execute the selected plan.

According to the present invention, a threshold is used in connection with the decision to use the serial or parallel execution plans. In the context of the present description, the aforementioned threshold may refer to any static or dynamic value which may be compared against an amount of available resources.

Specifically, in one option, the foregoing threshold may correspond to a number of threads that is necessary for executing a minimum number of entries (e.g. sub-queries) under the parallel execution plan **156.** In such embodiment, an execution engine determines a number of threads of processors (e.g. the processors **108A-108N** of Figure **1**) that are available for executing a particular query. If such number of threads is below a threshold, the serial execution plan **154** is chosen for execution.

On the other hand, if such number of threads is above the aforementioned threshold, the parallel execution plan **156** is chosen for execution. Further, a degree of parallelism in connection with the execution of such parallel execution plan **156** may be based on the number of available threads. For example, if there is an insufficient number of threads to run all entries in parallel, a subset of such entries may be initially executed and, upon completion of the execution of such entries, the resources of the particular data storage node may be reassessed to determine a size of the next subset of entries to be subsequently executed.

In the foregoing embodiment, a number of available threads may be the subject of change over time. Thus, at runtime/execution time, such number may be dynamically determined in real-time by, for example, counting a number of available CPU cores and then (assuming a constant thread-to-core ratio) calculating the corresponding number of available threads. As an additional option, the foregoing identified number of available threads may also drive a degree of parallelism to be used, if the threshold is met. To this end, the degree of parallelism may be dynamically determined, in some embodiments.

In another option, the aforementioned threshold may correspond to a number of CPU cores. In such embodiment, it may be determined that a system has X cores, and it may be predetermined that only half of such X cores may be used for parallel execution (to avoid an overload of resources). In such case, the threshold will be X/2, and any parallel processing that is determined to exceed such threshold (by itself or in aggregate) will be prevented.

In still yet another option, the aforementioned threshold may correspond to an amount of memory resources available to a processor. In such embodiment, it may be determined that a system has X GB of memory, and it may be predetermined that only twenty percent (20%) of such X GB of memory may be used for parallel execution (so that sufficient memory may be effectively used for other purposes). In such case, the threshold may be X^{∗}0.2, and any parallel processing that is determined to exceed such threshold (by itself or in aggregate) will be prevented.

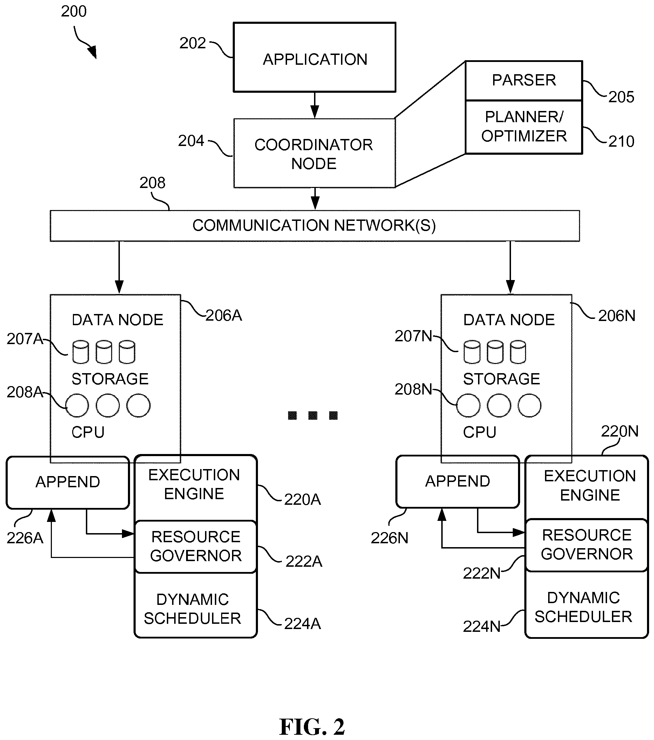

Figure **2** illustrates a database system **200** for executing both serial and parallel query execution plans, in accordance with another embodiment. As an option, the database system **200** may be implemented in the context of any one or more of the embodiments set forth in any previous and/or subsequent figure(s) and/or description thereof. For example, the database system **200** may be implemented in the context of the database system **100** of Figure **1A** and further be capable of carrying out the method **150** of Figure **1B****.** However, it is to be appreciated that the database system **200** may be implemented in the other suitable environments.

Similar to the database system **100** of Figure **1A****,** the database system **200** includes an application **202** in communication with a coordinator node **204** that, in turn, is in communication with a plurality of data storage nodes **206A-206N** via one or more communication networks **208.** Further, the data storage nodes **206A-206N** each include a plurality of respective storages **207A-207N,** processors **208A-208N,** and execution engines **220A-220N.**

In addition, the coordinator node **204** of the database system **200** includes a parser **205** and a database query planner/optimizer **210.** Further, the execution engines **220A-220N** of the data storage nodes **206A-206N** are each equipped with a resource governor **222A-222N** and a dynamic scheduler **224A-224N.** Still yet, each execution engine **220A-220N** is configured for processing one or more append operators **226A-226N** that are included in plans distributed by the coordinator node **204** and executed by the execution engines **220A-220N.**

In use, the application **202** issues the queries to the parser **205** of the coordinator node **204** which, in turn, parses the queries into at least one tree structure. In the context of the present description, such tree structure may include any data structure including hierarchically-organized components (e.g. entries and/or sub-queries reflecting various operations). In use, the tree structure is configured for being processed to produce an execution plan for the corresponding query. In one embodiment, the parser **205** may include a SQL parser. Further, the tree structure(s) may take the form of a binary tree, where each node of the binary tree represents one or more operations that were parsed from the aforementioned queries.

Accordingly, the query planner/optimizer **210** of the coordinator node **204** then processes the tree structure for generating and optimizing multiple execution plans, namely the aforementioned serial execution plan and the parallel execution plan. As mentioned earlier, in one embodiment involving the serial execution plan, the foregoing entries may be organized in a predetermined serial order corresponding to the aforementioned hierarchical organization. Further, in another embodiment involving the parallel execution plan, the foregoing entries may be organized into groups of entries that are devoid of any interdependencies that would otherwise preclude processing entry groups in parallel.

In any case, both execution plans are compiled and distributed to each of the data storage nodes **206A-206N** so that the appropriate one of the execution plans may be selected and executed by each of the corresponding data storage nodes **206A-206N** utilizing the corresponding one of the execution engines **220A-220N.** Specifically, in response to the receipt of a corresponding pair of execution plans, the resource governors **222A-222N** of the execution engines **220A-220N** each identify threads of the processors **208A-208N** that are currently available at the corresponding data storage node **206A-206N.** Given such accounting of resource availability, the dynamic schedulers **224A-224N** of the execution engines **220A-220N** each selects either the serial or parallel execution plan for the corresponding data storage node **206A-206N** and executes the same to retrieve the requested data from the appropriate respective storages **207A-207N** of the corresponding data storage node **206A-206N.**

Further, in the event that the parallel execution plan is executed, a degree of parallelism is selected based on the number of available processing threads. In the context of the present description, such degree of parallelism may be a number of processing elements (e.g. threads, cores, units, etc.) that are to be simultaneously (at least in part) used to process components (e.g. entries, sub-queries) of a database query in parallel. To the extent that: 1) such degree of parallelism is less than the number of entries in a parallel execution plan, and 2) unprocessed entries remain after processing of one or more other entries has completed; the resource governors **222A-222N** and the dynamic schedulers **224A-224N** may repeat the foregoing process of identifying available resources and setting an updated degree of parallelism accordingly.

In one possible embodiment, the degree of parallelism may refer to a number of threads that can be scheduled at the same time to process array entries. Further, the degree of parallelism may be selected based on a number of factors. For example, the degree of parallelism may be selected based on a number of available CPU cores, an amount of memory resources available, and even be user-specified. Specifically, in the case of CPU cores where it is predetermined that each physical CPU core can run up to two (2) threads, a number of the available CPU cores may be multiplied by two (2), in order to determine the degree of parallelism.

In another embodiment where an amount of available memory resources dictates the degree of parallelism, such degree of parallelism may be calculated by dividing an amount of total memory available by an amount of memory required for supporting one (1) degree of parallelism. In still another embodiment where the degree of parallelism is user selected, a user who ran a query may want to specify a maximum degree of parallelism to be sixteen (16), or some other number, to limit parallelism so that it does not consume all available resources. In still yet another embodiment, each of the foregoing factors may be considered, and a minimum or average of such factors may be used as the degree of parallelism.

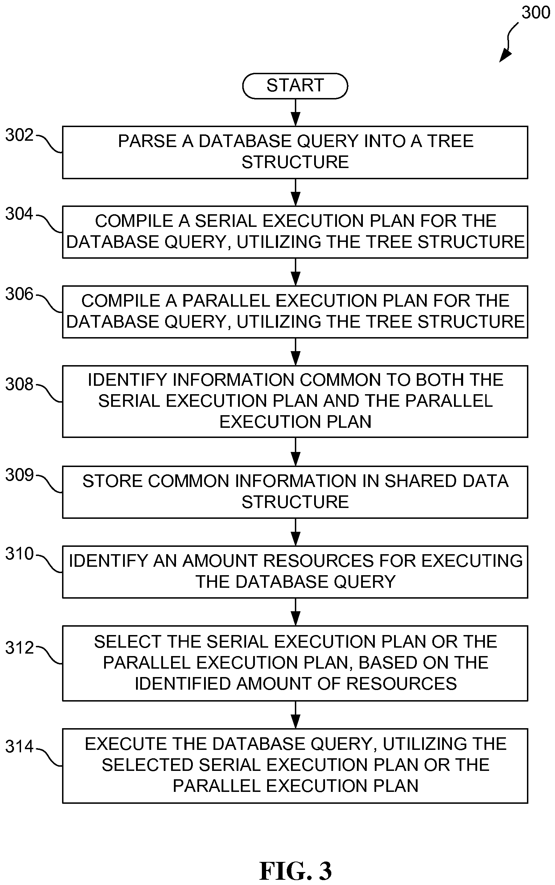

Figure **3** illustrates a flowchart of a method **300** for selecting a serial or parallel query execution plan based on available resources, in accordance with another embodiment. As an option, the method **300** may be implemented in the context of any one or more of the embodiments set forth in any previous and/or subsequent figure(s) and/or description thereof. For example, the method **300** may be implemented in the context of the database systems **100/200** of Figures **1A-2****.** However, it is to be appreciated that the method **300** may be implemented in other suitable environments.

As shown, in operation **302,** a database query is parsed into a tree structure after being received. In one possible embodiment, such query may be received from an application (e.g. the application **102/202** of Figures **1A-2****)** and may be parsed by a parser (e.g. the parser **205** of Figure **2****).** Further, in the context of the present embodiment, the parsing may include any processing that results in components (e.g. entries, sub-queries) being identified in the database query in a manner that permits the compilation of an execution plan, as described earlier.

In operation **304,** a serial execution plan is compiled for the database query, utilizing the tree structure. Similarly, in operation **306,** a parallel execution plan is compiled for the database query, utilizing the tree structure. In various embodiments, such plan compilation may include the organization of the entries in a serial or parallel fashion and including associated code or instructions for permitting execution of the respective plans accordingly. Further, in one possible embodiment, both of the foregoing execution plans may be generated by a database query planner/optimizer (e.g. query planner/optimizer **210** of Figure **2****).**

In some implementations, information common to both the serial execution plan and the parallel execution plan may be identified in operation **308.** In one possible embodiment, such common information that include the components (e.g. entries, sub-queries) themselves along with any other data and/or code that are required by both the serial execution plan and the parallel execution plan. Still yet, in operation **309,** such information is stored in a common data structure shared by the serial execution plan and the parallel execution plan. To this end, during the compilation, an amount of storage that is required at an associated coordinator node for storing the serial and parallel execution plan may be reduced, since multiple instances of the same information need not necessarily be separately and redundantly stored.

After the planning is complete, both of the execution plans are subsequently distributed to a plurality of execution engines of different data storage nodes (e.g. the execution engines **220A-220N** of the data storage node **206A-206N** of Figure **2****).** Again, to the extent that operations **308-309** have been carried out, during the planning, an amount of storage that is required at the different data storage nodes for storing the serial and parallel execution plan may also be reduced.

With continuing reference to Figure **3****,** an amount of resources for executing the database query is then identified in operation **310.** In the context of the present description, the resource amount identification may refer to any measurement of processing resources. For example, in one option, the resource amount identification may include a count of available processing threads. In another embodiment, the resource amount identification may include a count of available processing cores. In still other embodiment, an identification of available processing time may constitute the resource amount identification. In even still other embodiments, the resource amount identification may include a measurement of a processor load.

In use, such resource amount may be identified in any desired manner. For example, in one possible embodiment, the operation **310** may be carried out utilizing a resource governor of an execution engine (e.g. the resource governors **222A-222N** of the execution engines **220A-220N** of Figure **2****).** Further, operation **310** may be carried out at any point during runtime (e.g. at any time when execution of an execution plan is ready, imminent, and/or already under way).

In any case, the serial execution plan or the parallel execution plan is selected in operation **312,** based on the amount of resources identified in operation **310.** As mentioned earlier, such selection may be carried out utilizing any technique that is a function of the amount of resources identified in operation **310.** as described earlier, the selection involves a comparison of the amount of available resources against a minimum threshold. Specifically, such threshold may be set such that, if available resources simply cannot feasibly support parallel execution and/or would overuse resources, serial execution may be selected. Otherwise, parallel execution is selected. In other embodiments not belonging to the present invention, algorithms, a look-up table, or other logic may be used to determine whether a serial or parallel execution plan constitutes an efficient and/or effective use of available resources given an amount of such resources.

Thus, the database query is executed in operation **314,** utilizing the selected serial execution plan or the parallel execution plan. In one possible embodiment, the operations **312-314** may be carried out utilizing a resource governor of an execution engine (e.g. the dynamic schedulers **224A-224N** of the execution engines **220A-220N** of Figure **2****).**

To this end, in some optional embodiments, a database query execution plan may be selected based on a specific availability of resources. Further, such selection may be performed in real-time at a time of execution such that any indication of such resource availability is as accurate as possible. This may, in turn, result in improved performance when processing query execution plans as well as an improved use of resources that would otherwise be foregone in systems that lack such feature. More illustrative information will now be set forth regarding various optional architectures and uses in which the foregoing method may or may not be implemented, per the desires of the user. It should be noted that the following information is set forth for illustrative purposes and should not be construed as limiting in any manner. Any of the following features may be optionally incorporated with or without the other features described.

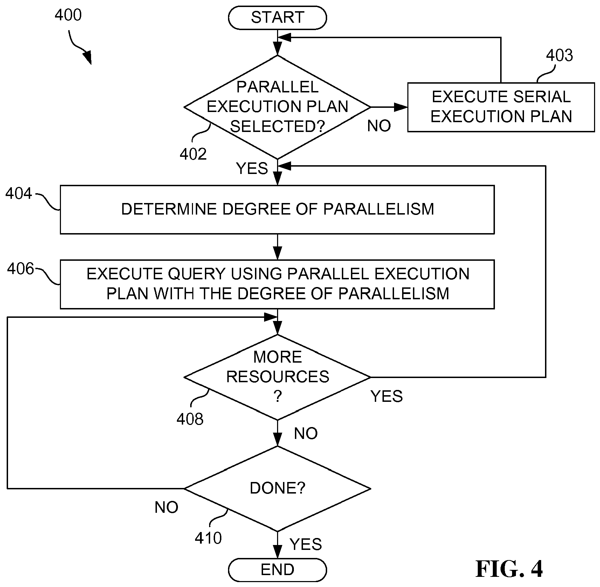

Figure **4** illustrates a flowchart of a method **400** for executing a parallel execution plan, in accordance with an embodiment. As an option, the method **400** may be implemented in the context of any one or more of the embodiments set forth in any previous and/or subsequent figure(s) and/or description thereof. For example, in one embodiment, the method **400** may be carried out in the context of the operation **314** of Figure **3** in the event that a parallel execution plan is selected/executed. However, it is to be appreciated that the method **400** may be implemented in other environments.

It is determined in decision **402** whether a parallel execution plan has been selected. In one embodiment, such selection may be carried out per the operation **312** of Figure **3****.** In response to the parallel execution plan not being selected per decision **402,** a serial execution plan is executed in operation **403.**

On the other hand, if the parallel execution plan is selected per decision **402,** a degree of parallelism is determined for the parallel execution plan in operation **404,** based on an identified amount of resources. As mentioned earlier, such degree of parallelism may be a number of processing elements (e.g. threads, cores, units, etc.) that are to be simultaneously (at least in part) used to process components (e.g. entries, sub-queries) of a database query in parallel. Further, such number (of processing elements) is set to be less than or equal to a number of components of the database query, since that is the maximum number of processing elements that would be necessary to run all database query components in parallel. In other words, if there are X database query components and all of the X database query components are capable of being executed in parallel via X processing elements, there is no need to allocate any number of processing elements that would exceed X. Still yet, the operation **404** may be carried out at runtime.

With continuing reference to Figure **4****,** the database query is shown to be then executed in operation **406** utilizing the parallel execution plan with the determined degree of parallelism. As an option, the database query may be executed utilizing a round robin routine. For example, in one possible embodiment, given X query components (e.g. entries) from an execution plan that are placed in a queue to be processed by Y processing elements such as threads (where X>Y), Z query components (where Z<X) may be assigned to the Y processing elements and, as they are completed, any of the Y processing elements that become available may be assigned to a next available query component until all X query components are processed.

Throughout the execution of the database query, it is determined per decision **408** whether there has been a change in an amount of resources (e.g. see operation **310** of Figure **3****).** In particular, it is determined whether more resources have become available (which are not allocated to other tasks). If so, the degree of parallelism is adjusted (e.g. augmented) and execution continues per operation **404-406.** In possible embodiment, the foregoing change in the amount of resources may be identified after a completion of each one of the components of the database query.

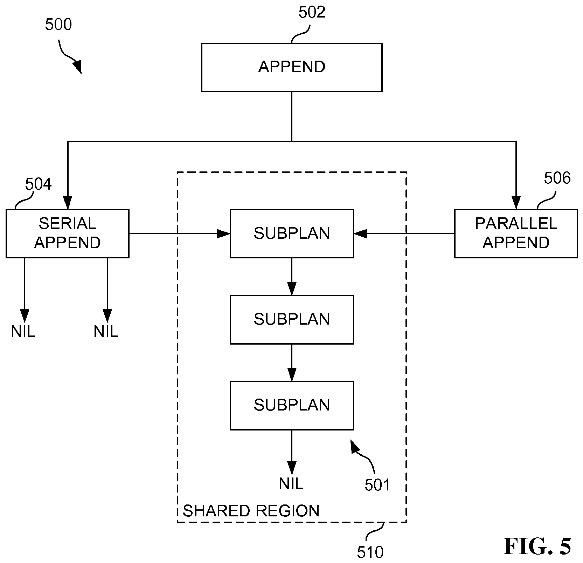

Figure **5** illustrates a technique **500** for storing information that is common to both a serial and parallel execution plan in a shared data structure, in accordance with an embodiment. As an option, the technique **500** may be implemented in the context of any one or more of the embodiments set forth in any previous and/or subsequent figure(s) and/or description thereof. For example, the technique **500** may be implemented in the context of operations **308-309** of Figure **3****.** However, it is to be appreciated that the technique **500** may be implemented in other suitable environments.

As mentioned earlier, information **501** common to both a serial execution plan **504** and a parallel execution plan **506** may be identified in connection with an append operator, for example. Further, such information may be stored in a common data structure **510** shared by the serial execution plan and the parallel execution plan. For example, in one possible embodiment, the common data structure **510** may store information resulting from query processing, as well as any data (e.g. an intermediate result) that needs to be returned to another level. This may, for example, be the case when processing multiple select operators, as set forth earlier in connection with Table 1. To this end, during planning, an amount of storage that is required at an associated coordinator node for storing the serial and parallel execution plan may be reduced.

As a further option, buffers at a coordinator node (e.g. the coordinator **104/204** of Figures **1A-2****)** and/or storage nodes (e.g. the storage nodes **106A-106N/206A-206N** of Figures **1A-2****)** may be allocated for storing any data/code of the serial execution plan and the parallel execution plan. In such case, a size and/or number of such buffers may be reduced as a result of the use of the aforementioned common data structure **510,** since less data will need to be stored.

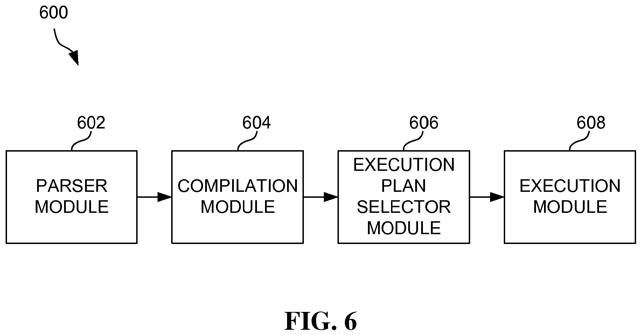

Figure 6 illustrates a database query execution system **600** for executing both serial and parallel query execution plans, in accordance with an embodiment. As an option, the database query execution system **600** may be implemented with one or more features of any one or more of the embodiments set forth in any previous and/or subsequent figure(s) and/or the description thereof. However, it is to be appreciated that the database query execution system **600** may be implemented in the other suitable environments.

As shown, a parser means in the form of a parser module **602** is provided for parsing a database query into a tree structure, in accordance, for example, with operation **302** of Figure **3****.** In various embodiments, the parser module **602** may include, but is not limited to the parser **205** of Figure **2****,** at least one processor (to be described later) and any software controlling the same, and/or any other circuitry capable of the aforementioned functionality.

Also included is a compilation means in the form of a compilation module **604** in communication with the parser module **602** for compiling a serial execution plan and a serial execution plan for the database query, utilizing the tree structure, in accordance, for example, with operations **304-306** of Figure **3****,** respectively. In various embodiments, the compilation module **604** may include, but is not limited to the planner/optimizer **210** of Figure **2****,** at least one processor (to be described later) and any software controlling the same, and/or any other circuitry capable of the aforementioned functionality.

Still further provided is an execution plan selector means in the form of an execution plan selector module **606** in communication with the compilation module **604** for selecting at least one of the serial execution plan or the parallel execution plan, based on an identified amount of resources, in accordance, for example, with operation **312** of Figure **3****.** In various embodiments, the execution plan selector module **606** may include, but is not limited to the resource governor **222A** of Figure **2****,** at least one processor (to be described later) and any software controlling the same, and/or any other circuitry capable of the aforementioned functionality.

Further included is an execution means in the form of an execution module **608** in communication with the execution plan selector module **606** for executing the database query, utilizing the selected at least one of the serial execution plan or the parallel execution plan, in accordance, for example, with operation **314** of Figure **3****.** In various embodiments, the execution module **608** may include, but is not limited to the dynamic scheduler **224A** of Figure **2****,** at least one processor (to be described later) and any software controlling the same, and/or any other circuitry capable of the aforementioned functionality.

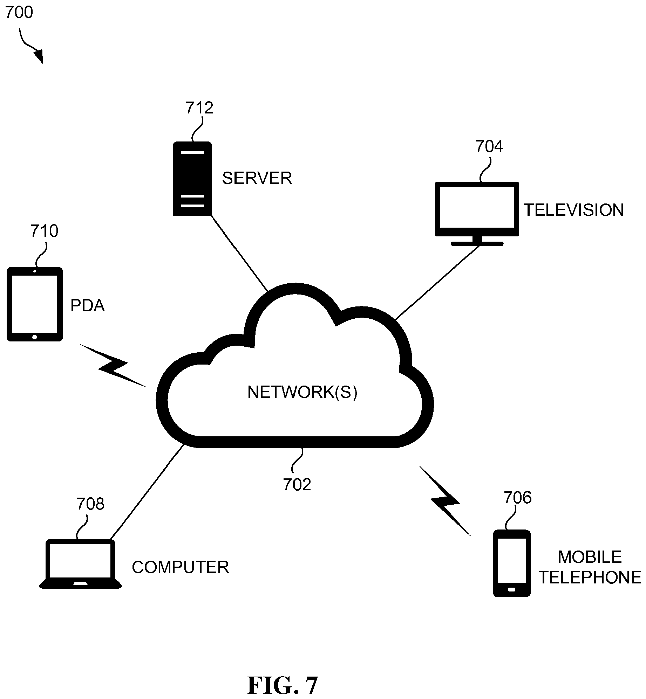

Figure **7** is a diagram of a network architecture **700,** in accordance with an embodiment. As shown, at least one network **702** is provided. In various embodiments, any one or more components/features set forth during the description of any previous figure(s) may be implemented in connection with any one or more components **704-712** coupled to the at least one network **702.** For example, in various embodiments, any of the components **704-712** may be equipped with the coordinator node **104** of Figure **1** and/or one or more data nodes **106A-N** of Figure **1****,** for compiling and/or executing serial and parallel database query execution plans.

In the context of the present network architecture **700,** the network **702** may take any form including, but not limited to a telecommunications network, a local area network (LAN), a wireless network, a wide area network (WAN) such as the Internet, peer-to-peer network, cable network, etc. While only one network is shown, it should be understood that two or more similar or different networks **702** may be provided.

Coupled to the network **702** is a plurality of devices. For example, a server **712** and a computer **708** may be coupled to the network **702** for communication purposes. Such computer **708** may include a desktop computer, lap-top computer, and/or any other type of logic. Still yet, various other devices may be coupled to the network **702** including a personal digital assistant (PDA) device **710,** a mobile phone device **706,** a television **704,** etc.

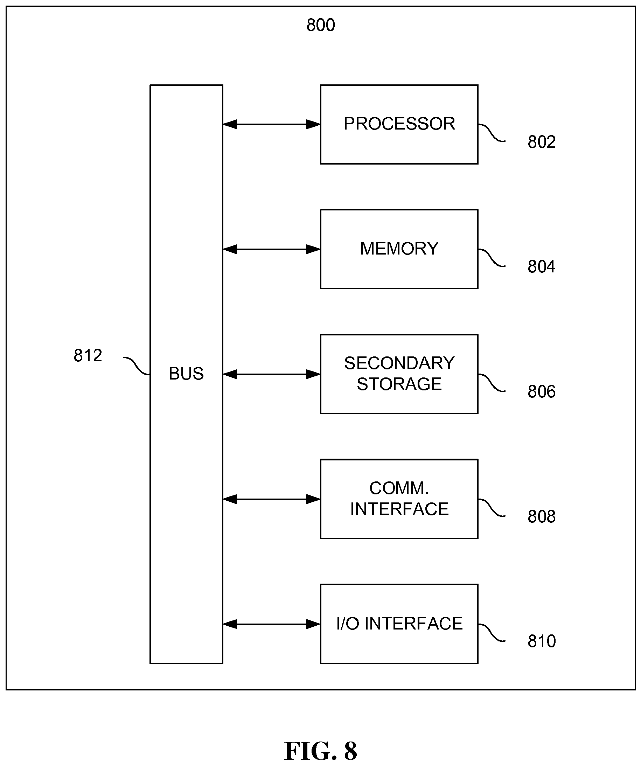

Figure **8** is a diagram of an exemplary processing device **800,** in accordance with an embodiment. As an option, the processing device **800** may be implemented in the context of any of the devices of the network architecture **700** of Figure **7****.** However, it is to be appreciated that the processing device **800** may be implemented in other suitable environments. For example, in various embodiments, the coordinator node **104** of Figure **1** and/or one or more data nodes **106A-N** of Figure **1** may be implemented on the processing device **800,** for compiling and/or executing serial and parallel database query execution plans.

As shown, the processing device **800** includes at least one processor **802** which is connected to a bus **812** for processing data (e.g. see steps **302-314** of Figure **3****,** etc.) The processing device **800** also includes memory **804** [e.g., hard disk drive, solid state drive, random access memory (RAM), etc.] coupled to the bus **812.** The memory **804** may include one or more memory components, and may even include different types of memory. Further included is a communication interface **808** (e.g. a network adapter, modem, etc.) and an input/output (I/O) interface **810** (e.g. display, speaker, microphone, touchscreen, touchpad, mouse interface, etc.).

The processing device **800** may also include a secondary storage **806.** The secondary storage **806** coupled to the bus **812** and/or to other components of the processing device **800.** The secondary storage **806** can include, for example, a hard disk drive and/or a removable storage drive, representing a floppy disk drive, a magnetic tape drive, a compact disk drive, etc. The removable storage drive reads from and/or writes to a removable storage unit in a well-known manner.

Computer programs, or computer control logic algorithms, may be stored in the memory **804,** the secondary storage **806,** and/or any other memory, for that matter. Such computer programs, when executed, enable the processing device **800** to perform various functions (as set forth above, for example). Memory **804,** secondary storage **806** and/or any other storage comprise non-transitory computer-readable media.

In one embodiment, the at least one processor **802** executes instructions in the memory **804** or in the secondary storage **806** to compile/execute serial and parallel database query execution plans, by: parsing a database query into a tree structure; compiling a serial execution plan for the database query, utilizing the tree structure; compiling a parallel execution plan for the database query, utilizing the tree structure; identifying an amount of resources for executing the database query; selecting at least one of the serial execution plan or the parallel execution plan, based on the identified amount of resources; and executing the database query, utilizing the selected serial execution plan and/or the parallel execution plan.

In some embodiments, information common to both the serial execution plan and the parallel execution plan may be identified. Further, the information may be stored in a common data structure shared by the serial execution plan and the parallel execution plan.

In some embodiments, a degree of parallelism may be determined for the parallel execution plan based on the identified amount of resources, if the parallel execution plan is selected. The degree of parallelism is less than a number of entries of the database query. Further, the database query may be executed utilizing the parallel execution plan with the determined degree of parallelism, if the parallel execution plan is selected.

In some embodiments, the database query may be executed utilizing a round robin routine, if the parallel execution plan is selected.

In some embodiments, a change in the amount of resources may be identified. Further, the degree of parallelism may be adjusted based on the identified change in the amount of resources. As an option, the change in the amount of resources may be identified after a completion of the execution in connection with one of the entries of the database query. Further, the degree of parallelism for the parallel execution plan may be determined at runtime.

In some embodiments, the database query may include a union operator, a union all operator, an except operator, and/or an intersect operator.

In some embodiments, the execution may occur at each of a plurality of data storage nodes.

It is noted that the techniques described herein, in an aspect, are embodied in executable instructions stored in a computer readable medium for use by or in connection with an instruction execution machine, apparatus, or device, such as a computer-based or processor-containing machine, apparatus, or device. It will be appreciated by those skilled in the art that for some embodiments, other types of computer readable media are included which may store data that is accessible by a computer, such as magnetic cassettes, flash memory cards, digital video disks, Bernoulli cartridges, random access memory (RAM), read-only memory (ROM), or the like.

As used here, a "computer-readable medium" includes one or more of any suitable media for storing the executable instructions of a computer program such that the instruction execution machine, system, apparatus, or device may read (or fetch) the instructions from the computer readable medium and execute the instructions for carrying out the described methods. Suitable storage formats include one or more of an electronic, magnetic, optical, and electromagnetic format. A non-exhaustive list of conventional exemplary computer readable medium includes: a portable computer diskette; a RAM; a ROM; an erasable programmable read only memory (EPROM or flash memory); optical storage devices, including a portable compact disc (CD), a portable digital video disc (DVD), a high definition DVD (HD-DVD^{™}), a BLU-RAY disc; or the like.

In the description above, the subject matter is described with reference to acts and symbolic representations of operations that are performed by one or more devices, unless indicated otherwise. As such, it will be understood that such acts and operations, which are at times referred to as being computer-executed, include the manipulation by the processor of data in a structured form. This manipulation transforms the data or maintains it at locations in the memory system of the computer, which reconfigures or otherwise alters the operation of the device in a manner well understood by those skilled in the art. The data is maintained at physical locations of the memory as data structures that have particular properties defined by the format of the data. However, while the subject matter is being described in the foregoing context, it is not meant to be limiting as those of skill in the art will appreciate that various of the acts and operations described hereinafter may also be implemented in hardware.

To facilitate an understanding of the subject matter described herein, many aspects are described in terms of sequences of actions. At least one of these aspects defined by the claims is performed by an electronic hardware component. For example, it will be recognized that the various actions may be performed by specialized circuits or circuitry, by program instructions being executed by one or more processors, or by a combination of both.

The use of the terms "a" and "an" and "the" and similar referents in the context of describing the subject matter (particularly in the context of the following claims) are to be construed to cover both the singular and the plural, unless otherwise indicated herein or clearly contradicted by context. Recitation of ranges of values herein are merely intended to serve as a shorthand method of referring individually to each separate value falling within the range, unless otherwise indicated herein, and each separate value is incorporated into the specification as if it were individually recited herein. Furthermore, the foregoing description is for the purpose of illustration only, and not for the purpose of limitation, as the scope of protection sought is defined by the claims as set forth hereinafter together with any equivalents thereof entitled to. The use of any and all examples, or exemplary language (e.g., "such as") provided herein, is intended merely to better illustrate the subject matter and does not pose a limitation on the scope of the subject matter unless otherwise claimed. The use of the term "based on" and other like phrases indicating a condition for bringing about a result, both in the claims and in the written description, is not intended to foreclose any other conditions that bring about that result. No language in the specification should be construed as indicating any non-claimed element as essential to the practice of the invention as claimed.

The embodiments described herein include the one or more modes known to the inventor for carrying out the claimed subject matter. It is to be appreciated that variations of those embodiments will become apparent to those of ordinary skill in the art upon reading the foregoing description. The inventor expects skilled artisans to employ such variations as appropriate, and the inventor intends for the claimed subject matter to be practiced otherwise than as specifically described herein. Accordingly, this claimed subject matter includes all modifications and equivalents of the subject matter recited in the claims appended hereto as permitted by applicable law.

## Claims

1. A computer-implemented method comprising:
parsing (302) a database query into a tree structure;
compiling (304) a serial execution plan for the database query, utilizing the tree structure;
compiling (306) a parallel execution plan for the database query, utilizing the tree structure;
identifying (310) an amount of resources for executing the database query;
wherein the identified amount of resources includes at least one of a count of processing threads, a count of processing cores, an amount of processing time,
and one or more memory resources available to a processor;
**characterized by**
selecting (312) at least one of the serial execution plan or the parallel execution plan, based on the identified amount of resources; and
executing (314) the database query, utilizing the selected at least one of the serial execution plan or the parallel execution plan;
wherein the selection (312) of at least one of the serial execution plan or the parallel execution plan is based on the identified amount of resources, by:
comparing the identified amount of resources to a threshold; and
selecting at least one of the serial execution plan or the parallel execution plan, based on the comparison;
wherein the comparing the identified amount of resources to a threshold comprises at least one of following:
(1) the threshold corresponds to a number of processing threads that is necessary for executing a minimum number of entries under the parallel execution plan, if the count of processing threads is above the threshold, the parallel execution plan is selected for execution; if the count of processing threads is below the threshold, the serial execution plan is selected for execution;
(2) the threshold corresponds to half of CPU cores of a system, if the count of processing cores exceeds the threshold, the parallel execution plan is prevented;
(3) the threshold corresponds to twenty percent of an amount of the memory resources available to a processor in the system, if the one or more memory resources exceeds the threshold, the parallel execution plan is prevented.

2. The method of claim 1, and further comprising:
identifying (308) information common to both the serial execution plan and the parallel execution plan; and
storing (309) the information in a common data structure shared by the serial execution plan and the parallel execution plan.

3. The method of claim 1, and further comprising:
determining (404) a degree of parallelism for the parallel execution plan that is less than a number of entries of the parallel execution plan of the database query based on the identified amount of resources, if the parallel execution plan is selected; and
executing (406) the database query utilizing the parallel execution plan with the determined degree of parallelism, if the parallel execution plan is selected.

4. The method of claim 3, wherein the database query is executed utilizing a round robin routine, if the parallel execution plan is selected.

5. The method of claim 3, and further comprising:
identifying a change in the amount of resources; and
adjusting the degree of parallelism based on the identified change in the amount of resources.

6. The method of claim 5, wherein the change in the amount of resources is identified after a completion of the execution in connection with one of the entries of the database query.

7. The method of claim 3, wherein the degree of parallelism for the parallel execution plan is determined at runtime.

8. The method of claim 1, wherein the database query includes at least one of a union operator, a union all operator, an except operator, or an intersect operator.

9. The method of claim 1, wherein the execution occurs at each of a plurality of data storage nodes.

10. The method of claim 1, wherein the identified amount of resources includes at least one of: a count of processing threads, a count of processing cores, or an amount of processing time.

11. A non-transitory computer-readable media storing computer instructions, that when executed by one or more processors, cause the one or more processors to perform the method according to any one of the claims 1 to 10.

12. A processing device, comprising:
a non-transitory memory comprising instructions; and
one or more processors in communication with the memory, wherein the one or more processors execute the instructions to perform the method according to any one of the claims 1 to 10.

## Patentansprüche

1. Computerimplementiertes Verfahren, umfassend:
Parsing (302) einer Datenbankabfrage in eine Baumstruktur;
Kompilieren (304) eines seriellen Ausführungsplans für die Datenbankabfrage unter Verwendung der Baumstruktur;
Kompilieren (306) eines parallelen Ausführungsplans für die Datenbankabfrage unter Verwendung der Baumstruktur;
Identifizieren (310) einer Menge von Ressourcen zum Ausführen der Datenbankabfrage;
wobei die identifizierte Menge von Ressourcen mindestens eines von einer Zählung von Verarbeitungs-Threads, einer Zählung von Verarbeitungskernen, einer Menge von Verarbeitungszeit und einer oder mehrerer Speicherressourcen beinhaltet, die einem Prozessor zur Verfügung stehen;
**gekennzeichnet durch**
Auswählen (312) mindestens eines von dem seriellen Ausführungsplan und dem parallelen Ausführungsplan basierend auf der identifizierten Menge von Ressourcen; und
Ausführen (314) der Datenbankabfrage unter Verwendung des ausgewählten mindestens einen von dem seriellen Ausführungsplan und dem parallelen Ausführungsplan;
wobei die Auswahl (312) mindestens eines von dem seriellen Ausführungsplan und dem parallelen Ausführungsplan auf der identifizierten Menge von Ressourcen basiert, **durch**:
Vergleichen der identifizierten Menge von Ressourcen mit einem Schwellenwert; und
Auswählen mindestens eines von dem seriellen Ausführungsplan und dem parallelen Ausführungsplan basierend auf dem Vergleich;
wobei das Vergleichen der identifizierten Menge von Ressourcen mit einem Schwellenwert mindestens eines von Folgendem umfasst:
(1) der Schwellenwert einer Anzahl von Verarbeitungs-Threads entspricht, die zum Ausführen einer Mindestanzahl von Einträgen unter dem parallelen Ausführungsplan notwendig ist, falls die Zählung von Verarbeitungs-Threads über dem Schwellenwert liegt, der parallele Ausführungsplan für eine Ausführung ausgewählt wird; falls die Zählung von Verarbeitungs-Threads unter dem Schwellenwert liegt, der serielle Ausführungsplan für die Ausführung ausgewählt wird;
(2) der Schwellenwert der Hälfte der CPU-Kerne eines Systems entspricht, falls die Zählung von Verarbeitungskernen den Schwellenwert überschreitet, der parallele Ausführungsplan verhindert wird;
(3) der Schwellenwert zwanzig Prozent einer Menge der Speicherressourcen entspricht, die einem Prozessor in dem System zur Verfügung stehen, falls der eine oder die mehreren Speicherressourcen den Schwellenwert überschreiten, der parallele Ausführungsplan verhindert wird.

2. Verfahren nach Anspruch 1, und ferner umfassend:
Identifizieren (308) von Informationen, die sowohl dem seriellen Ausführungsplan als auch dem parallelen Ausführungsplan gemeinsam sind; und
Speichern (309) der Informationen in einer gemeinsamen Datenstruktur, die durch den seriellen Ausführungsplan und den parallelen Ausführungsplan gemeinsam genutzt wird.

3. Verfahren nach Anspruch 1, und ferner umfassend:
Bestimmen (404) eines Parallelitätsgrads für den parallelen Ausführungsplan, der kleiner als eine Anzahl von Einträgen des parallelen Ausführungsplans der Datenbankabfrage basierend auf der identifizierten Menge von Ressourcen ist, falls der parallele Ausführungsplan ausgewählt wird; und
Ausführen (406) der Datenbankabfrage unter Verwendung des parallelen Ausführungsplans mit dem bestimmten Parallelitätsgrad, falls der parallele Ausführungsplan ausgewählt wird.

4. Verfahren nach Anspruch 3, wobei die Datenbankabfrage unter Verwendung eines Round-Robin-Routine ausgeführt wird, falls der parallele Ausführungsplan ausgewählt wird.

5. Verfahren nach Anspruch 3, und ferner umfassend:
Identifizieren einer Änderung in der Menge von Ressourcen; und
Anpassen des Parallelitätsgrads basierend auf der identifizierten Änderung in der Menge von Ressourcen.

6. Verfahren nach Anspruch 5, wobei die Änderung in der Menge von Ressourcen nach einem Abschluss der Ausführung in Verbindung mit einem der Einträge der Datenbankabfrage identifiziert wird.

7. Verfahren nach Anspruch 3, wobei der Parallelitätsgrad für den parallelen Ausführungsplan zu einer Laufzeit bestimmt wird.

8. Verfahren nach Anspruch 1, wobei die Datenbankabfrage mindestens eines von einem Vereinigungsoperator, einem Vereinigungs-All-Operator, einem Ausnahmeoperator und einem Schnittoperator beinhaltet.

9. Verfahren nach Anspruch 1, wobei die Ausführung an jedem einer Vielzahl von Datenspeicherknoten erfolgt.

10. Verfahren nach Anspruch 1, wobei die identifizierte Menge von Ressourcen mindestens eines beinhaltet:
eine Zählung von Verarbeitungs-Threads, eine Zählung von Verarbeitungskernen und eine Menge von Verarbeitungszeit.

11. Nicht flüchtiges computerlesbares Medium zum Speichern von Computeranweisungen, die, wenn sie durch einen oder mehrere Prozessoren ausgeführt werden, den einen oder die mehreren Prozessoren veranlassen, das Verfahren nach einem der Ansprüche 1 bis 10 durchzuführen.

12. Verarbeitungsvorrichtung, umfassend:
einen nicht flüchtigen Speicher, umfassend Anweisungen; und
einen oder mehrere Prozessoren in Kommunikation mit dem Speicher, wobei der eine oder die mehreren Prozessoren die Anweisungen ausführen, um das Verfahren nach einem der Ansprüche 1 bis 10 durchzuführen.

## Revendications

1. Procédé mis en œuvre par ordinateur comprenant :
l'analyse (302) d'une requête de base de données en une structure arborescente ;
la compilation (304) d'un plan d'exécution en série pour la requête de base de données, à l'aide de la structure arborescente ;
la compilation (306) d'un plan d'exécution parallèle pour la requête de base de données, à l'aide de la structure arborescente ;
l'identification (310) d'une quantité de ressources pour l'exécution de la requête de base de données ;
la quantité identifiée de ressources comportant un compte de fils de traitement et/ou un compte de cœurs de traitement et/ou une quantité de temps de traitement et/ou une ou plusieurs ressources de mémoire disponibles pour un processeur ;
**caractérisé par**
la sélection (312) du plan d'exécution en série et/ou du plan d'exécution parallèle, en fonction de la quantité de ressources identifiée ; et
l'exécution (314) de la requête de base de données, à l'aide du plan d'exécution en série et/ou du plan d'exécution parallèle sélectionné ;
la sélection (312) du plan d'exécution en série et/ou du plan d'exécution parallèle étant basée sur la quantité de ressources identifiée, par :
la comparaison de la quantité de ressources identifiée à un seuil ; et
la sélection du plan d'exécution en série et/ou du plan d'exécution parallèle, en fonction de la comparaison ;
la comparaison de la quantité identifiée de ressources à un seuil comprenant au moins l'un des éléments suivants :
(1) le seuil correspond à un nombre de fils de traitement nécessaire à l'exécution d'un nombre minimum d'entrées sous le plan d'exécution parallèle, si le compte de fils de traitement est supérieur au seuil, le plan d'exécution parallèle est sélectionné pour l'exécution ; si le compte de fils de traitement est inférieur au seuil, le plan d'exécution en série est sélectionné pour l'exécution ;
(2) le seuil correspond à la moitié des cœurs d'UC d'un système, si le compte de cœurs de traitement dépasse le seuil, le plan d'exécution parallèle est empêché ;
(3) le seuil correspond à vingt pour cent d'une quantité de ressources de mémoire disponibles pour un processeur dans le système, si la ou les ressources de mémoire dépassent le seuil, le plan d'exécution parallèle est empêché.

2. Procédé selon la revendication 1, et comprenant en outre :
l'identification (308) d'informations communes à la fois au plan d'exécution en série et au plan d'exécution parallèle ; et
le stockage (309) des informations dans une structure de données commune partagée par le plan d'exécution en série et le plan d'exécution parallèle.

3. Procédé selon la revendication 1 comprenant en outre :
la détermination (404) d'un degré de parallélisme pour le plan d'exécution parallèle qui est inférieur à un nombre d'entrées du plan d'exécution parallèle de la requête de base de données en fonction de la quantité de ressources identifiée, si le plan d'exécution parallèle est sélectionné ; et
l'exécution (406) de la requête de base de données à l'aide du plan d'exécution parallèle avec le degré de parallélisme déterminé, si le plan d'exécution parallèle est sélectionné.

4. Procédé selon la revendication 3, la requête de base de données étant exécutée à l'aide d'une routine à répétition alternée, si le plan d'exécution parallèle est sélectionné.

5. Procédé selon la revendication 3, et comprenant en outre :
l'identification d'un changement dans la quantité de ressources ; et
le réglage du degré de parallélisme en fonction du changement identifié de la quantité de ressources.

6. Procédé selon la revendication 5, le changement dans la quantité de ressources étant identifié après l'achèvement de l'exécution en relation avec l'une des entrées de la requête de base de données.

7. Procédé selon la revendication 3, le degré de parallélisme pour le plan d'exécution parallèle étant déterminé au niveau du temps d'exécution.

8. Procédé selon la revendication 1, la requête de base de données comportant un opérateur d'union et/ou un opérateur d'union de tout et/ou un opérateur d'exclusion et/ou un opérateur d'intersection.

9. Procédé selon la revendication 1, l'exécution ayant lieu au niveau de chaque nœud d'une pluralité de nœuds de stockage de données.

10. Procédé selon la revendication 1, la quantité identifiée de ressources comportant : un compte de fils de traitement et/ou un compte de cœurs de traitement et/ou une quantité de temps de traitement.

11. Support non transitoire lisible par ordinateur stockant des instructions informatiques qui, lorsqu'elles sont exécutées par un ou plusieurs processeurs, amènent le ou les processeurs à réaliser le procédé selon l'une quelconque des revendications 1 à 10.

12. Dispositif de traitement, comprenant :
une mémoire non transitoire comprenant des instructions ; et
un ou plusieurs processeurs en communication avec la mémoire, le ou les processeurs exécutant les instructions pour réaliser le procédé selon l'une quelconque des revendications 1 à 10.
